# FASCICULE DE BREVET EUROPEEN

(11) **EP 2 683 258 B1**
(45) Date de publication et mention de la délivrance du brevet: **10.06.2015**
(21) Numéro de dépôt: 12709556.0
(22) Date de dépôt: 08.03.2012
(51) Int. Cl.: A23L 2/48, A23L 3/32, A23L 3/005, A23B 5/01, A23L 1/025, C02F 1/48

(54) **DISPOSITIF POUR LE TRAITEMENT PAR CHAMP ELECTRIQUE PULSE D'UN PRODUIT**
VORRICHTUNG ZUM BEHANDELN EINES PRODUKTES MITTELS EINES GEPULSTEN ELEKTRISCHEN FELDES
DEVICE FOR TREATING A PRODUCT BY MEANS OF A PULSED ELECTRIC FIELD

(30) Priorité: 11.03.2011 FR 1152010
(43) Date de publication de la demande: 15.01.2014
(73) Titulaire: Commissariat à l'Énergie Atomique et aux Énergies Alternatives, 75015 Paris (FR)
(72) Inventeur: SCHRIVE, Luc, F-30130 Pont Saint Esprit (FR); GANDI, Florent, F-30330 Saint Andre D'olerargues (FR)
(74) Mandataire: Ahner, Philippe
(86) Numéro de dépôt international: PCT/EP2012/054050
(87) Numéro de publication internationale: WO 2012/123339

(56) Documents cités:
- DE-C- 945 206
- FR-A- 1 107 346
- FR-A1- 2 792 207
- GB-A- 696 060
- US-A- 5 235 905
- US-A- 5 326 446
- SATO M ET AL: "High efficiency sterilizer by high voltage pulse using concentrated field electrodesystein", INDUSTRY APPLICATIONS CONFERENCE, 2000. CONFERENCE RECORD OF THE 2000 IEEE 8-12 OCTOBER 2000, PISCATAWAY, NJ, USA,IEEE, vol. 2, 8 octobre 2000 (2000-10-08), pages 784-787, XP010521405, ISBN: 978-0-7803-6401-1

## Description

### DOMAINE TECHNIQUE

L'invention se rapporte au domaine du traitement de produits circulant à travers un dispositif prévu à cet effet.

L'invention concerne par exemple le traitement d'aliments liquides ou semi-solides, comme le lait, le jus d'orange, les purées de fruits ou le blanc d'oeuf.

L'invention peut également concerner le domaine du traitement des eaux, et des boues.

### ETAT DE LA TECHNIQUE ANTERIEURE

Les techniques de pasteurisation ont fait l'objet de nombreuses études dans l'art antérieur, eu égard notamment à l'essor des produits longue conservation, qui nécessitent l'absence totale de micro-organismes pour pouvoir être consommables à longue durée.

Classiquement, la pasteurisation consiste à chauffer les aliments à une température définie pendant une durée définie de sorte à dépasser le seuil de thermorésistance des bactéries pathogènes étant à l'origine de la détérioration des aliments. Dans un second temps, afin de conserver au maximum les qualités organoleptiques des produits, les aliments chauffés sont refroidis rapidement, par exemple à des températures de l'ordre de 3 à 4°C.

Ce principe classique a fait l'objet de nombreuses variantes appartenant à la catégorie des traitements dits « traitements thermiques ».

Les traitements thermiques pour la pasteurisation peuvent consister en l'utilisation comme vecteur de chaleur des moyens suivantes :
- les radiations électromagnétiques, telles que les radiations infrarouges, les radiations micro-ondes ;
- la chaleur découlant du phénomène d'effet Joule créée dans un tube à l'intérieur duquel circule le produit à pasteuriser ;
- la chaleur ohmique résultant du passage d'un courant électrique à travers le produit à pasteuriser.

Les températures de pasteurisation atteintes par voie thermique s'échelonnent classiquement de 70°C à 85°C. Toutefois, il peut subsister, après traitement dans ces gammes de températures, certaines formes pathogènes telles que des spores incompatibles pour des produits destinés à l'alimentation.

Pour détruire ces formes pathogènes, une des solutions peut consister à chauffer les aliments à des températures plus élevées que la gamme susmentionnée (par exemple à des températures supérieures à 90°C). Toutefois, l'utilisation de températures plus élevées s'accompagne inéluctablement d'une dénaturation du produit traité, telle qu'une dénaturation des protéines présentes dans le produit, ce qui ne va pas souvent sans une perte des qualités gustatives du produit.

Pour remédier à ces inconvénients, il a été proposé de recourir à des procédés dits « à faible température », de sorte à conserver le goût original du produit. Ces procédés consistent à recourir à des moyens d'élimination des bactéries pathogènes autres que l'utilisation d'un chauffage, permettant de traiter les aliments à des températures ne dépassant pas 60°C. Ces moyens peuvent consister en des rayonnements ionisants, l'utilisation de hautes pressions, en de la lumière pulsée, en l'utilisation d'un gaz tel que le gaz carbonique.

Parmi ces moyens, il existe donc des dispositifs de traitement par champ électrique pulsé, dont les effets s'apparentent à une électrocution de micro-organismes. Les dispositifs de traitement par champs électriques pulsés sont classés en deux catégories, selon que les lignes de champ électrique sont sensiblement orthogonales ou sensiblement parallèles au sens général d'écoulement du produit. On parle alors respectivement de dispositifs de traitement transversaux et longitudinaux. Les dispositifs transversaux sont réputés pour les faibles pertes de charges rencontrées, ainsi que pour la bonne uniformité du champ pulsé qu'ils confèrent, surtout lorsque les électrodes forment des plaques parallèles.

A cet égard, de nombreux dispositifs de traitement transversaux à plaques parallèles sont connus de l'art antérieur, notamment celui décrit dans le document JP 2000 102371. D'autres dispositfs sont également décrits dans les documents suivants: "High efficiency sterilizer by high voltage pulse using concentrated field electrode system" Sato M et al 2000; DE 945 206C, FR 2 792 207 et GB 696 060.

Néanmoins, malgré l'existence de nombreuses réalisations dans ce domaine, il existe un besoin d'optimiser la conception des dispositifs de traitement, afin de les rendre plus compacts et/ou plus facilement réalisables, et/ou plus faciles à entretenir pendant leur durée de vie, dans le but de les maintenir dans un bon état de fonctionnement.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention est definie comme dans la première revendication.

L'invention est donc remarquable en ce qu'elle prévoit d'utiliser le conduit d'amenée ou d'évacuation de produit pour raccorder électriquement la première électrode au générateur d'impulsions. Ce conduit remplit alors une double fonction de transfert du produit dans ou en dehors de la zone de traitement, et de raccordement électrique entre le générateur d'impulsions et la première électrode.

D'une manière générale, cette spécificité permet de simplifier la conception du dispositif de traitement, le rendant ainsi plus compact et plus facilement réalisable. Cela engendre également une simplification du démontage requis à des fins de maintenance, de nettoyage ou de réparation du dispositif.

D'autre part, le choix d'électrodes en forme de plaques parallèles permet d'obtenir un dispositif de traitement transversal avec un champ électrique très homogène dans la zone de traitement.

De préférence, ladite seconde électrode est au contact de l'autre des deux conduits d'amenée et d'évacuation de produit, ce conduit permettant d'appliquer à ladite seconde électrode un potentiel inférieur, en valeur absolue, à celui de ladite première électrode.

Par conséquent, l'autre des deux conduits permet également de mettre la seconde électrode au potentiel souhaité, par exemple en la reliant à la masse, à la terre, ou bien même à une seconde borne de sortie du générateur d'impulsions.

De préférence, lesdits deux conduits d'amenée et d'évacuation de produit sont orientés sensiblement orthogonalement auxdites première et seconde électrodes.

De préférence, lesdites première et seconde électrodes sont espacées l'une de l'autre par un joint d'étanchéité électriquement isolant maintenu par serrage entre ces deux électrodes, par exemple par boulons. La conception est ainsi extrêmement simplifiée, et le montage / démontage aisé à mettre en oeuvre. L'épaisseur du joint comprimé entre les deux électrodes correspond ici alors à la hauteur de la zone de traitement. De plus, cette conception simplifiée permet de diminuer au maximum la présence de recoins comme des gorges ou des crevasses, susceptibles de piéger et de retenir des micro-organismes qui n'auraient pas pu être traités convenablement lors des premières impulsions électriques. Dans ce cas non souhaité, il est connu qu'un seul micro-organisme peut se multiplier et former une colonie de micro-organismes, susceptible de contaminer le produit en écoulement au voisinage de ladite colonie.

De préférence, ladite zone de traitement est exclusivement définie par le joint d'étanchéité et par les premières et secondes électrodes. Le nombre d'éléments constitutifs est donc très peu élevé, rendant ainsi le dispositif extrêmement simple à réaliser. Préférentiellement, dans cette configuration, le produit à traiter n'est au contact que de deux matériaux différents, l'un utilisé pour fabriquer les électrodes, l'autre utilisé pour la fabrication du joint. On évite/limite ainsi des hétérogénéités géométriques et matérielles aux alentours d'un point triple constitué d'un conducteur (l'électrode), d'un isolant (le joint) et du liquide.

De préférence, lesdites première et seconde électrodes présentent chacune un chant dépourvu d'angle vif. Cela permet de limiter les éventuels problèmes de corrosion et d'érosion des électrodes, notamment rencontrés au niveau d'angles droits, à partir desquels des phénomènes d'arc électrique sont susceptibles de se produire. Ainsi, chaque électrode prend préférentiellement une forme globale ronde, ovale ou oblongue.

De préférence, chacune des première et seconde électrodes présente une surface intérieure, orientée vers l'autre électrode, globalement plane.

Alternativement, chacune des première et seconde électrodes présente une surface intérieure, orientée vers l'autre électrode, équipée d'un rebord périphérique en saillie vers cette autre électrode, la jonction entre le flanc intérieur du rebord périphérique et la surface intérieure de l'électrode étant arrondie. Cette forme arrondie permet d'améliorer le nettoyage, de diminuer les zones de rétention de micro-organismes, et de produire une zone de champ légèrement plus faible au voisinage immédiat du joint isolant, afin de limiter la probabilité de formation d'un arc électrique.

Selon encore une autre alternative, chacune des première et seconde électrodes présente une surface intérieure, orientée vers l'autre électrode, équipée d'un bossage en saillie vers cette autre électrode, et en regard du conduit d'amenée ou d'évacuation de produit associée à cette autre électrode. Cela permet avantageusement, et de manière simple, de produire un régime hydrodynamique au sein de la zone de traitement.

De préférence, le générateur d'impulsions est du type classique et connu de l'homme du métier, capable de générer des impulsions haute-tension.

De préférence, le dispositif est apte à traiter les aliments liquides ou semi-solides, ou encore les eaux et les boues.

Le traitement d'autres produits est également possible. Des exemples non limitatifs sont donnés ci-dessous.

Le traitement s'applique par exemple à un milieu liquide contenant des cellules eucaryote et/ou procaryote et/ou eubactéries, d'origines animales ou végétales, unicellulaires comme des levures, champignons, algues et d'autres formes vivantes comme virus, phages, etc.

Il peut également s'appliquer à toute ou une partie d'organismes pluricellulaires d'origine animale (protozoaires, larves, etc.) ou d'origine végétale (fruit entier et ou partiel, betterave, etc.).

Lorsqu'elles sont vivantes, les cellules issues d'organismes unicellulaires peuvent être en phase de latence, de croissance (cellules végétatives) ou stationnaire, ou encore sporulées.

Le traitement peut avoir plusieurs bruts :
- stérilisation ou pasteurisation de liquides (eau, effluents, jus de fruits, lait, blanc d'oeufs, etc.) ;
- prétraitement et hygiénisation des boues de station avant épandage, ou déshydratation avant séchage ;
- éclatement de cellules de fruits ou d'algues avant pressage pour obtenir un jus de fruit ou un extrait gras en facilitant l'opération de pressage mécanique ou tout autre traitement d'extraction (par solvant organique, par fluide supercritique, etc.) ;
- traitement de cellules en manipulations génétiques afin de contribuer à l'introduction de molécules exogènes (ADN, ARN, protéines, etc.).

D'autres caractéristiques et avantages de l'invention apparaîtront dans la description non limitative ci-dessous.

### BRÈVE DESCRIPTION DES DESSINS

Cette description sera faite au regard des dessins annexés parmi lesquels :
- la figure 1 représente une vue en perspective d'un dispositif de traitement selon un premier mode de réalisation préféré de l'invention ;
- la figure 2 représente une vue de côté du dispositif montré sur la figure 1 ;
- la figure 3 représente une vue en coupe prise le long de la ligne III-III de la figure 2 ;
- la figure 3a représente une vue en coupe prise le long de la ligne IIIa-IIIa de la figure 3, avec le joint d'étanchéité se présentant sous une autre forme de réalisation ;
- la figure 4 représente une vue similaire à celle de la figure 3, avec le dispositif de traitement se présentant sous la forme d'un second mode de réalisation préféré de l'invention ;
- la figure 5 représente une vue de côté du dispositif de traitement montré sur la figure 4 ;
- la figure 6 représente une vue similaire à celle de la figure 3, avec le dispositif de traitement se présentant sous la forme d'un troisième mode de réalisation préféré de l'invention ;
- la figure 7 représente une vue en coupe prise le long de la ligne VII-VII de la figure 6 ;
- les figures 8 à 10 montrent des vues en perspective du dispositif 1 équipé de conduits d'amenée et d'évacuation de produit présentant une forme différente.

### EXPOSÉ DÉTAILLÉ DE MODES DE RÉALISATION PRÉFÉRÉS

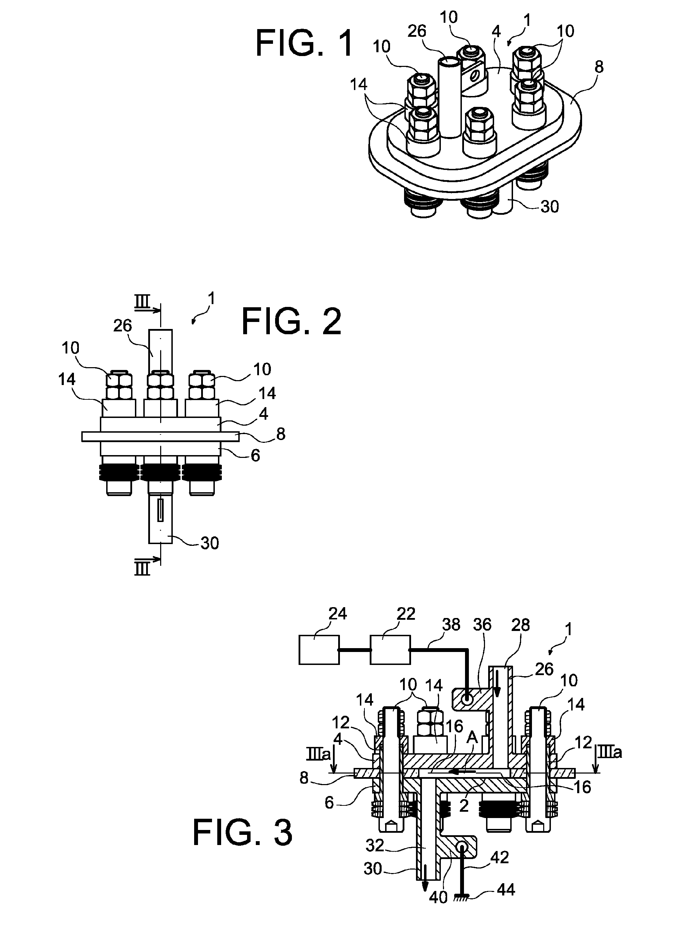

En référence aux figures 1 à 7, on voit un dispositif 1 de traitement par champ électrique pulsé selon divers modes de réalisation préférés de l'invention.

Un produit à traiter circule à l'aide de moyens conventionnels de mise en mouvement dans une zone de traitement 2 du dispositif 1, dans une direction principale de circulation du produit représentée par la flèche A. C'est à l'intérieur de la zone de traitement 2 qu'un champ électrique pulsé est appliqué, afin d'assurer le traitement désiré.

Comme cela sera détaillé ci-après, les lignes de champ du champ électrique pulsé sont ici orthogonales à la direction A au sein de la zone de traitement 2.

Le produit à traiter peut être de tout type. A titre d'exemple, on peut citer les aliments liquides comme le lait, le jus d'orange ou le blanc d'oeuf, les aliments semi-solides, les eaux destinées à être rendues potables, ou encore les boues.

Le traitement par champ électrique pulsé a pour but de supprimer l'ensemble des organismes indésirables ayant colonisé le produit.

En référence tout d'abord au premier mode de réalisation préféré représenté sur les figures 1 à 3, on peut apercevoir que le dispositif de traitement 1 comporte deux électrodes formant chacune une plaque, de faible épaisseur. Il s'agit d'une première électrode 4 et d'une seconde électrode 6, agencées parallèlement et à distance l'une de l'autre. Comme cela sera détaillé ci-après, ces deux électrodes 4, 6 sont de polarités opposées, afin que leur association, en combinaison avec un générateur d'impulsions 22, engendre la création d'un champ électrique pulsé dans la zone 2.

Cette zone de traitement 2 est effectivement délimitée vers le haut et vers le bas respectivement par les deux électrodes 4, 6. Latéralement, elle est délimitée par un joint d'étanchéité 8 électriquement isolant, suivant la périphérie des deux électrodes en forme de plaque, entre lesquelles elle est enserrée. En effet, ce joint 8 chemine le long d'une ligne fermée du type dépourvue d'angle vif, en particulier dépourvue d'angle droit, et qui prend une forme de cercle, une forme ovale, ou encore une forme oblongue. C'est selon ce même type de forme de ligne que s'étend le chant droit de chacune des deux électrodes 4, 6.

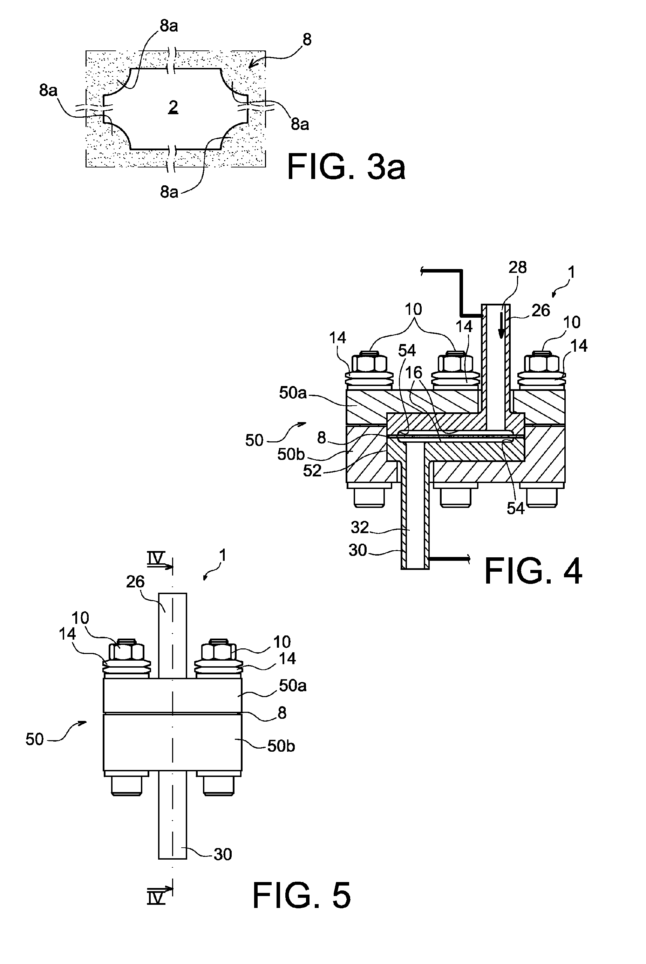

Alternativement, comme cela est montré à titre d'exemple sur la figure 3a, le joint 8 peut présenter intérieurement, au niveau de chaque angle, un bourrelet 8a de forme globalement convexe orientée vers l'intérieur de la zone de traitement 2. Cela permet de limiter les effets de bord au niveau de ces angles, où le champ électrique risque d'être localement beaucoup plus intense. Le joint 8 conserve néanmoins une forme globale du type de celle mentionnée ci-dessus, à savoir dépourvue d'angle vif, en particulier dépourvue d'angle droit, et qui prend une forme de cercle, une forme ovale, ou encore une forme oblongue.

Ici, la zone de traitement 2 est donc délimitée uniquement par les deux électrodes et par le joint maintenu par serrage entre celles-ci. Le serrage est effectué préférentiellement à l'aide de boulons 10, agencés orthogonalement aux électrodes. Pour ce faire, chaque électrode peut présenter des trous de passage traversés par des fourreaux isolants 12, à travers lesquels cheminent les vis de boulons. De la même manière, des rondelles isolantes 14 sont interposées entre les écrous de boulons et la première électrode 4, de manière à éviter un appui direct contre celle-ci.

La hauteur de la zone 2, qui est sa plus petite dimension, est donc définie par l'épaisseur du joint 8, maintenu entre les deux électrodes par la force de serrage conférée par les boulons 10. Ces derniers sont par exemple au nombre de six, régulièrement répartis le long de la périphérie des électrodes.

Dans ce premier mode de réalisation préféré de l'invention, la première et la seconde électrodes 4, 6 présentent chacune une surface intérieure 16 globalement plane, orientée vers l'autre électrode et en appui sur le joint 8. Cette conception permet de diminuer au maximum la présence de recoins comme des gorges ou des crevasses, susceptibles de piéger des micro-organismes qui n'auraient pas pu être traités convenablement lors des premières impulsions électriques.

En outre, le dispositif de traitement 1 comporte un conduit 26 d'amenée de produit dans la zone 2, ce conduit étant étroitement lié à la première électrode 4 avec laquelle il est en contact. De préférence, ces deux éléments 4, 26 sont rapportés fixement l'un sur l'autre, par exemple par soudage, ou bien réalisés d'une seule pièce. Le conduit 26 définit un canal 28 d'axe orienté sensiblement orthogonalement à l'électrode 4. Ce canal 28 peut s'étendre jusqu'à déboucher dans la zone de traitement 2, ou bien déboucher dans un orifice traversant de l'électrode 4, lui-même débouchant dans la zone 2. Quoi qu'il en soit, le produit circulant dans le canal 28 finit par pénétrer dans la zone de traitement 2, au sein de laquelle il s'écoule selon la direction A.

De manière analogue, le dispositif de traitement 1 comporte un conduit 30 d'évacuation du produit en dehors de la zone 2, ce conduit étant étroitement lié à la seconde électrode 6 avec laquelle il est en contact. De préférence, ces deux éléments 6, 30 sont rapportés fixement l'un sur l'autre, par exemple par soudage, ou bien réalisés d'une seule pièce. Le conduit 30 définit un canal 32 d'axe orienté orthogonalement à l'électrode 6. Ce canal 32 peut s'étendre jusqu'à déboucher dans la zone de traitement 2, ou bien déboucher dans un orifice traversant de l'électrode 6, lui-même débouchant dans la zone 2. Le produit s'écoulant selon la direction A au sein de la zone 2 finit donc par s'extraire de celle-ci en pénétrant dans le canal 32, étant donné que les conduits 26, 30 sont situés à des extrémités opposées de la zone 2, selon la direction A.

L'une des particularités de la présente invention réside dans le fait que le conduit 26 est non seulement employé pour assurer l'arrivée du produit dans la zone de traitement 2, mais également pour mettre la première électrode 4 au potentiel désiré.

En effet, le conduit 26 est équipé d'une patte de fixation 36 permettant de le relier électriquement au générateur d'impulsions 22, par câble électrique 38.

De manière similaire, le conduit 30 est non seulement employé pour assurer l'évacuation du produit en dehors de la zone de traitement 2, mais également pour mettre la seconde électrode 6 au potentiel désiré. Ici, le conduit 30 est équipé d'une patte de fixation 40 permettant de le relier électriquement à la masse ou à la terre 44, par câble électrique 42. Alternativement, la seconde patte pourrait être reliée électriquement à une seconde borne de sortie du générateur d'impulsions 22, de potentiel inférieur, en valeur absolue, à celui de sa première borne reliée au conduit 26.

Par conséquent, les électrodes 4, 6 sont amenées à leurs potentiels respectifs via les conduits 26, 30, de sorte que ces derniers remplissent une double fonction qui simplifie la conception globale du dispositif.

Le générateur d'impulsions est du type classique et connu de l'homme du métier. Il permet de générer des impulsions haute-tension, par exemple d'une durée de 1 µs à 1 ms, à une intensité comprise entre 7000 V/cm et 100 000 V/cm.

La surface de chaque électrode 4, 6 délimitant la zone 2 est de quelques centimètres carrés, par exemple de 0,1 à 100 cm², et encore plus préférentiellement entre 1 et 50 cm², pour délivrer une densité de courant de crête comprise entre 100 et 5 000 A/cm², jusqu'à éventuellement un maximum de 10 000 A/cm².

Enfin, pour un traitement plus efficace du produit, le dispositif 1 est réalisé de sorte que la circulation de ce produit soit continue dans la zone de traitement 2, selon la direction A, et que le champ électrique pulsé soit uniforme. Ce champ électrique pulsé est d'ailleurs transversal, à savoir que la direction de ses lignes de champ est sensiblement orthogonale à la direction principale A de circulation du produit.

Avec cette configuration, le produit circulant dans la zone de traitement 2 est de préférence seulement au contact de deux matériaux distincts, le premier matériau, conducteur, utilisé pour la réalisation des électrodes 4, 6 et des conduits 26, 30, et le second matériau, isolant électriquement, utilisé pour réaliser le joint d'étanchéité 8.

Le premier matériau est de préférence retenu pour résister aux phénomènes électrochimiques. Il est par exemple du type acier inoxydable, titane, alliages de type inconel, monel, ou graphite, ou tout autre matériau conducteur de l'électricité, notamment parmi les matériaux composites.

Le second matériau présente une bonne résistance mécanique pour ne pas fluer avec la température et la pression de serrage. Il peut être du type PTFE, PVDF, PET, EPDM, silicone, ou tout autre matériau élastomère ou non.

Dans le premier mode de réalisation préféré, bien que cela n'ait pas été représenté, les électrodes peuvent être enveloppées par un coffrage isolant entourant le dispositif.

Un tel coffrage 50 est montré sur les figures 4 et 5 illustrant un second mode de réalisation préféré. Le coffrage est ici réalisé en une partie supérieure 50a et une partie inférieure 50b enveloppant les électrodes 4, 6. Ces deux parties sont maintenues serrées l'une contre l'autre par les boulons 10 qui les traversent. Ces derniers n'agissent donc plus directement sur les électrodes, mais sur les parties de coffrage 50a, 50b qui les enserrent. D'ailleurs, les boulons peuvent ne pas traverser les électrodes, mais seulement le coffrage qui les maintien serrées, ce qui permet de s'affranchir de la présence des fourreaux isolants décrits précédemment. Ce coffrage peut aussi assurer une fonction de mâchoire de serrage, de telle sorte qu'un dispositif de serrage par levier ou par collier vienne resserrer les mâchoires, les électrodes et le joint. Dans ce cas, il n'y a plus besoin de boulons et les opérations de montage et démontage sont simplifiées.

Dans ce second mode de réalisation préféré, la surface intérieure 16 des électrodes n'est plus entièrement plane, mais présente un rebord périphérique 52 en saillie vers l'autre électrode. Le joint 8 est alors comprimé entre ces deux rebords périphériques 52 directement en regard. De plus, la jonction 54 entre chaque flanc intérieur du rebord périphérique 52, et la surface intérieure 16 de l'électrode, est arrondie. Cela permet de limiter la présence de zones de rétention, de faciliter le nettoyage et de limiter la probabilité d'arcs électriques.

Un autre avantage des électrodes globalement planes parallèles contenant des orifices d'amenée et de sortie globalement orthogonaux non disposés en vis à vis est de produire des turbulences hydrodynamiques dont l'effet est synergique avec l'effet du champ électrique. La raison est que le micro-organisme soumis aux turbulences est alors orienté aléatoirement de façon variée par rapport aux lignes de champ électriques, et subit les impacts dudit champ électrique sur toute sa surface.

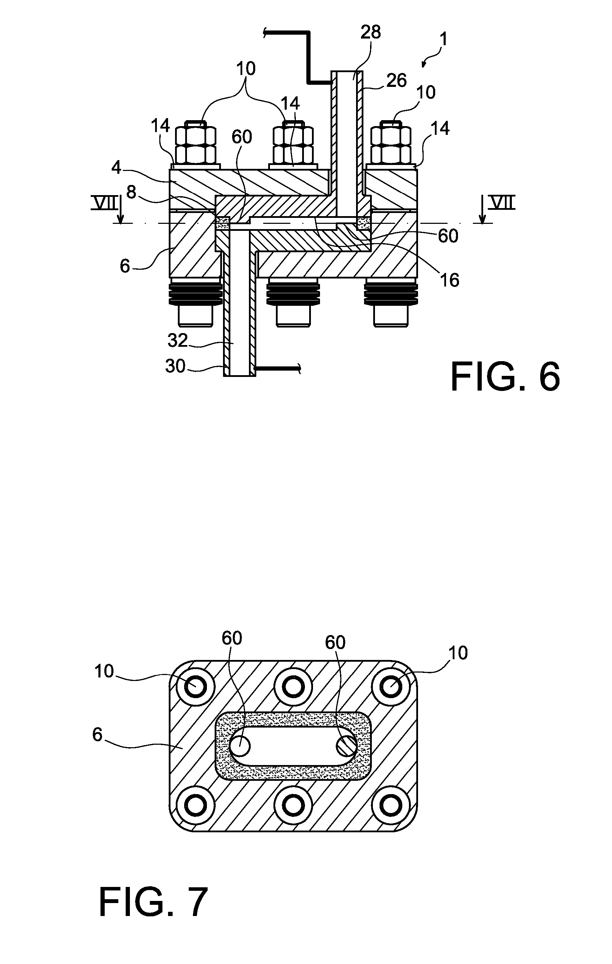

Enfin, selon un troisième mode de réalisation préféré de l'invention représenté sur les figures 6 et 7, la surface intérieure 16 de chaque électrode 4, 6 présente un bossage 60 en saillie vers l'autre électrode, et agencé en regard du conduit d'amenée ou d'évacuation de produit 26, 30 associé à cette autre électrode. Ce bossage 60 présente de préférence une forme hémisphérique.

De préférence, le diamètre de ce bossage, qui s'étend dans la zone de traitement 2, est identique ou similaire au diamètre intérieur du conduit 26, 30 en regard duquel il se situe.

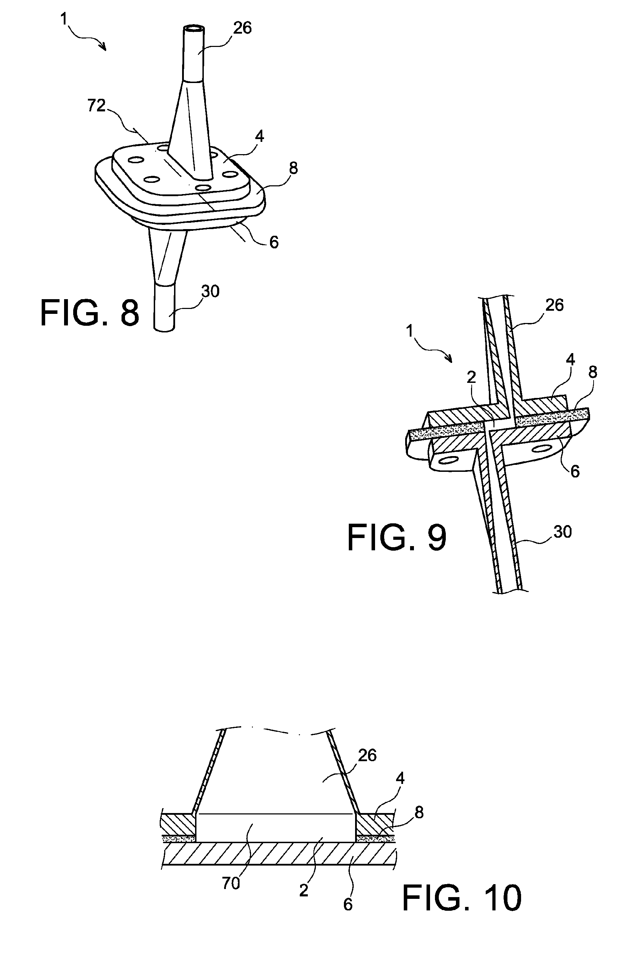

Quel que soit le mode de réalisation envisagé, il est prévu que chaque conduit 26, 30 présente une section constante circulaire. Alternativement, comme cela a été schématisé sur les figures 8 à 10, chaque conduit 26, 30 peut être évasé, c'est-à-dire qu'il s'élargit en s'approchant de la zone de traitement, par exemple en s'élargissant de façon triangulaire, à partir d'une section circulaire. Aussi, au niveau de la jonction avec la zone de traitement 2, l'ouverture 70 du conduit peut être de dimension identique ou similaire à celle de la zone de traitement 2, avec par exemple une forme rectangulaire ou oblongue, permettant un écoulement sous forme d'une veine liquide réduisant les pertes de charges hydrauliques. L'ouverture élargie 70 peut naturellement être de dimension inférieure à celle de la zone de traitement 2, sans sortir du cadre de l'invention. Comme dans les autres modes de réalisation, sur les figures 8 et 9, il est montré que les deux conduits 26, 30 sont agencés symétriquement par rapport à un axe de symétrie 72 du dispositif.

## Revendications

1. Dispositif (1) de traitement par champ électrique pulsé d'un produit destiné à circuler à travers ce dispositif, ce dernier comprenant une première et une seconde électrodes (4, 6) formant plaques parallèles entre lesquelles est définie une zone de traitement (2), et comprenant également un générateur d'impulsions (22) relié électriquement au moins à ladite première électrode (4) de manière à pouvoir appliquer un champ électrique pulsé dans la zone de traitement (2) à travers laquelle ledit produit est destiné à s'écouler, le champ électrique pulsé présentant une direction sensiblement orthogonale à une direction principale (A) de circulation du produit entre les deux électrodes, ledit dispositif comportant en outre un conduit (26) d'amenée du produit dans ladite zone de traitement ainsi qu'un conduit (30) d'évacuation du produit en dehors de la zone de traitement,
**caractérisé en ce que** ladite première électrode (4) est reliée électriquement au générateur d'impulsions (22) par l'intermédiaire de l'un des deux conduits d'amenée et d'évacuation (26, 30), agencé au contact de cette première électrode.

2. Dispositif (1) de traitement selon la revendication 1, **caractérisé en ce que** ladite seconde électrode (6) est au contact de l'autre des deux conduits d'amenée et d'évacuation de produit (26, 30), ce conduit permettant d'appliquer à ladite seconde électrode un potentiel inférieur, en valeur absolue, à celui de ladite première électrode.

3. Dispositif (1) de traitement selon la revendication 1 ou la revendication 2, **caractérisé en ce que** lesdits deux conduits d'amenée et d'évacuation de produit (26, 30) sont orientés sensiblement orthogonalement auxdites première et seconde électrodes (4, 6).

4. Dispositif (1) de traitement selon l'une quelconque des revendications précédentes, **caractérisé en ce que** lesdites première et seconde électrodes (4, 6) sont espacées l'une de l'autre par un joint d'étanchéité (8) électriquement isolant maintenu par serrage entre ces deux électrodes.

5. Dispositif (1) de traitement selon la revendication 4, **caractérisé en ce que** ladite zone de traitement (2) est exclusivement définie par le joint d'étanchéité (8) et par les premières et secondes électrodes (4, 6).

6. Dispositif (1) de traitement selon l'une quelconque des revendications précédentes, **caractérisé en ce que** lesdites première et seconde électrodes (4, 6) présentent chacune un chant dépourvu d'angle vif.

7. Dispositif (1) de traitement selon l'une quelconque des revendications précédentes, **caractérisé en ce que** chacune des première et seconde électrodes (4, 6) présente une surface intérieure (16), orientée vers l'autre électrode, globalement plane.

8. Dispositif (1) de traitement selon l'une quelconque des revendications 1 à 6, **caractérisé en ce que** chacune des première et seconde électrodes (4, 6) présente une surface intérieure (16), orientée vers l'autre électrode, équipée d'un rebord périphérique (52) en saillie vers cette autre électrode, la jonction entre le flanc intérieur du rebord périphérique (52) et la surface intérieure (16) de l'électrode étant arrondie.

9. Dispositif (1) de traitement selon l'une quelconque des revendications 1 à 6, **caractérisé en ce que** chacune des première et seconde électrodes (4, 6) présente une surface intérieure (16), orientée vers l'autre électrode, équipée d'un bossage (60) en saillie vers cette autre électrode, et en regard du conduit d'amenée ou d'évacuation de produit associée à cette autre électrode.

## Patentansprüche

1. Vorrichtung (1) zur Behandlung eines Produkts, das durch diese Vorrichtung hindurch zirkulieren soll, mithilfe eines gepulsten elektrischen Felds, wobei die Vorrichtung eine erste und eine zweite Elektrode (4, 6) umfasst, die parallele Platten bilden, zwischen denen eine Behandlungszone (2) definiert ist, und ferner umfassend einen Pulsgenerator (22), der elektrisch wenigstens mit der ersten Elektrode (4) derart verbunden ist, das ein gepulstes elektrisches Feld in der Behandlungszone (2) angelegt werden kann, durch welche hindurch das Produkt passieren soll, wobei das gepulste elektrische Feld eine Richtung im Wesentlichen orthogonal zu einer Hauptrichtung (A) der Zirkulation des Produkts zwischen den beiden Elektroden aufweist, wobei die Vorrichtung ferner eine Leitung (26) zum Zuführen des Produkts in die Behandlungszone sowie eine Leitung (30) zum Abführen des Produkts aus der Behandlungszone heraus umfasst,
**dadurch gekennzeichnet, dass** die erste Elektrode (4) elektrisch mit dem Pulsgenerator (22) mithilfe einer der beiden Zufuhr- bzw. Abfuhrleitungen (26, 30) verbunden ist, die in Kontakt mit dieser ersten Elektrode angeordnet ist.

2. Vorrichtung (1) zur Behandlung nach Anspruch 1, **dadurch gekennzeichnet, dass** die zweite Elektrode (6) in Kontakt mit der anderen der beiden Zufuhr- bzw. Abfuhrleitungen des Produkts (26, 30) ist, wobei diese Leitung es ermöglicht, an die zweite Elektrode ein Potenzial anzulegen, dessen Absolutwert kleiner ist als jenes der ersten Elektrode.

3. Vorrichtung (1) zur Behandlung nach Anspruch 1 oder Anspruch 2, **dadurch gekennzeichnet, dass** die zwei Zufuhr- bzw. Abfuhrleitungen für das Produkt (26, 30) im Wesentlichen orthogonal zu der ersten und zweiten Elektrode (4, 6) orientiert sind.

4. Vorrichtung (1) zur Behandlung nach einem der vorhergehenden Ansprüche, **dadurch gekennzeichnet, dass** die erste und die zweite Elektrode (4, 6) voneinander durch eine Dichtverbindung (8) beabstandet sind, die elektrisch isolierend durch Einspannen zwischen diesen beiden Elektroden gehalten ist.

5. Vorrichtung (1) zur Behandlung nach Anspruch 4, **dadurch gekennzeichnet, dass** die Behandlungszone (2) ausschließlich durch die Dichtverbindung (8) und durch die erste und zweite Elektrode (4, 6) definiert ist.

6. Vorrichtung (1) zur Behandlung nach einem der vorhergehenden Ansprüche, **dadurch gekennzeichnet, dass** die erste und die zweite Elektrode (4, 6) jeweils einen Rand ohne scharfe Kante aufweisen.

7. Vorrichtung (1) zur Behandlung nach einem der vorhergehenden Ansprüche, **dadurch gekennzeichnet, dass** sowohl die erste als auch die zweite Elektrode (4, 6) eine innere Oberfläche (16) aufweist, die zur anderen Elektrode hin orientiert und im Wesentlichen plan ist.

8. Vorrichtung (1) zur Behandlung nach einem der Ansprüche 1 bis 6, **dadurch gekennzeichnet, dass** sowohl die erste als auch die zweite Elektrode (4, 6) eine innere Oberfläche (16) aufweist, die zur anderen Elektrode hin orientiert ist und mit einem Umfangsrand (52) ausgestattet ist, der zu dieser anderen Elektrode hin vorsteht, wobei der Anschluss zwischen der inneren Flanke des Umfangsrands (52) und der inneren Oberfläche (16) der Elektrode abgerundet ist.

9. Vorrichtung (1) zur Behandlung nach einem der Ansprüche 1 bis 6, **dadurch gekennzeichnet, dass** sowohl die erste als auch die zweite Elektrode (4, 6) eine innere Oberfläche (16) aufweist, die zu der anderen Elektrode hin orientiert ist und mit einer Ausbauchung (60) ausgestattet ist, die zu dieser anderen Elektrode hin vorsteht und der Zufuhr- oder Abfuhrleitung für das Produkt gegenüber liegt, und dieser anderen Elektrode zugeordnet ist.

## Claims

1. Device (1) for the treatment by a pulsed electric field of a product intended to circulate through this device, this device comprising first and second electrodes (4, 6) forming parallel plates between which a treatment zone (2) is defined, and also comprising a pulse generator (22) electrically connected to at least said first electrode (4) so as to be able to apply a pulsed electric field in the treatment zone (2) through which said product will flow, the pulsed electric field having a direction approximately orthogonal to a principal product flow direction (A) between the two electrodes, said device also comprising a product inlet conduit (26) into said treatment zone and a product outlet conduit (30) through which the product exits from the treatment zone,
**characterised in that** said first electrode (4) is electrically connected to the pulse generator (22) through either the inlet conduit or the outlet conduit (26, 30), arranged in contact with this first electrode.

2. Treatment device (1) according to claim 1, **characterised in that** said second electrode (6) is in contact with the other product inlet or outlet conduit (26, 30), this conduit being used to apply a potential with a lower absolute value than the potential for said first electrode, to said second electrode.

3. Treatment device (1) according to claim 1 or claim 2, **characterised in that** said product inlet conduit and outlet conduit (26, 30) are oriented to be approximately orthogonal to said first and second electrodes (4, 6).

4. Treatment device (1) according to any one of the previous claims, **characterised in that** said first and second electrodes (4, 6) are kept at a certain distance from each other by an electrically insulating seal (8) squeezed between these two electrodes.

5. Treatment device (1) according to claim 4, **characterised in that** said treatment zone (2) is defined exclusively by the seal (8) and by the first and second electrodes (4, 6).

6. Treatment device (1) according to any one of the previous claims, **characterised in that** each of said first and second electrodes (4, 6) has one edge with no sharp corner.

7. Treatment device (1) according to any one of the previous claims, **characterised in that** each of the first and second electrodes (4, 6) has a globally plane inner surface (16), facing the other electrode.

8. Treatment device (1) according to any one of claims 1 to 6, **characterised in that** each of the first and second electrodes (4, 6) has an inner surface (16) oriented towards the other electrode, provided with a peripheral rim (52) projecting towards this other electrode, the junction between the inner edge of the peripheral rim (52) and the inner surface (16) of the electrode being rounded.

9. Treatment device (1) according to any one of claims 1 to 6, **characterised in that** each of the first and second electrodes (4, 6) has an inner surface (16) oriented towards the other electrode, provided with a bushing (60) projecting towards this other electrode, and facing the product inlet or outlet conduit associated with this other electrode.
